# EUROPÄISCHE PATENTANMELDUNG

(11) **EP 4 523 927 A1**
(43) Veröffentlichungstag der Anmeldung: **19.03.2025**
(21) Anmeldenummer: 24198555.5
(22) Anmeldetag: 05.09.2024
(51) Int. Cl.: B60C 11/24, B60C 23/06, B60C 19/00

(54) **VERFAHREN ZUM ERMITTELN EINES UNGLEICHMÄSSIG ABGENUTZTEN FAHRZEUGREIFENS UND VERSCHLEISSERMITTLUNGSANORDNUNG**

(30) Priorität: 14.09.2023 DE 102023208943
(71) Anmelder: Continental Reifen Deutschland GmbH, 30175 Hannover (DE)
(72) Erfinder: Lehmann, Jörg, 30175 Hannover (DE); Bender, Waldemar, 30175 Hannover (DE); Niss, Torsten, 30175 Hannover (DE); Zimmermann, Bernd, 30175 Hannover (DE)
(74) Vertreter: Continental Corporation

(57) **Zusammenfassung**

Die Erfindung betrifft ein Verfahren zum Ermitteln eines ungleichmäßig abgenutzten Fahrzeugreifens (2) mit mindestens zwei Sensoreinheiten (3a, 3b), die in unterschiedlichen Reifen-Bereichen (2a, 2b) beabstandet zu einer Reifenmitte (M) angeordnet sind, mit mindestens den folgenden Schritten:
- Einlesen einer ersten radialen Beschleunigung über die Zeit von der ersten Sensoreinheit (3a) und einer zweiten radialen Beschleunigung über die Zeit von der zweiten Sensoreinheit (3b);
- Ermitteln einer ersten Aufstandsgröße in Abhängigkeit der ersten radialen Beschleunigung und einer zweiten Aufstandsgröße in Abhängigkeit der zweiten radialen Beschleunigung, wobei die jeweilige Aufstandsgröße eine Bodenaufstandslänge charakterisiert, über die der Fahrzeugreifen (2) in dem jeweiligen Reifen-Bereich (2a, 2b) auf einer Fahrbahn aufliegt;
- Ermitteln einer Abweichung zwischen der ersten Aufstandsgröße und der zweiten Aufstandsgröße;
- Ermitteln, ob die Abweichung ein Zulässigkeitskriterium erfüllt, das angibt, ob die ermittelte Abweichung innerhalb eines zugelassenen Wertebereiches liegt; und
- Ausgeben eines Hinweis-Signals, wenn das Zulässigkeitskriterium nicht erfüllt ist.

## Beschreibung

Die Erfindung betrifft ein Verfahren zum Ermitteln eines ungleichmäßig abgenutzten Fahrzeugreifens, sowie eine Verschleißermittlungsanordnung zur Durchführung des Verfahrens.

Fahrzeugreifen können im Betrieb einen asymmetrischen oder ungleichmäßigen Abrieb oder Verschleiß erfahren, beispielsweise im Hafenbetrieb oder auch in anderen Anwendungen mit schwerer Beladung. Bei einem solchen unregelmäßigen Abrieb weicht eine äußere Profiltiefe einer äußeren Schulter eines Fahrzeugreifens wesentlich von einer inneren Profiltiefe einer inneren Schulter desselben Fahrzeugreifens ab. Wird ein solch unregelmäßiger Abrieb an einem Fahrzeugreifen festgestellt, kann der jeweilige Fahrzeugreifen mit einem anderen Fahrzeugreifen an demselben Fahrzeug, bei dem der gegensätzliche Effekt an der jeweiligen Schulter auftritt, getauscht werden. Auf diese Weise kann die Nutzungsdauer bzw. die gefahrene Strecke des jeweiligen Fahrzeugreifens verlängert werden. Das Feststellen dieses ungleichmäßigen Verschleißes geschieht normalerweise durch eine manuelle Messung durch einen Nutzer, wodurch der optimale Zeitpunkt für einen solchen Reifentausch nicht immer sicher getroffen werden kann.

In US 8775017 B2 ist beschrieben, an zwei unterschiedlichen Fahrzeugreifen des Fahrzeuges ein Reifen-Sensor-Modul anzuordnen und ein von dem jeweiligen Reifen-Sensor-Modul ausgegebenes Verzögerungssignal auszuwerten. Dabei hat eine Deformation einer Innenseite des jeweiligen Fahrzeugreifens im Betrieb einen Einfluss auf das jeweilige Verzögerungssignal. Ergänzend wirkt sich auch der Abrieb oder Verschleiß des jeweiligen Fahrzeugreifens auf das jeweilige Verzögerungssignal aus, so dass aus einem Unterschied zwischen den Verzögerungssignalen zweier Fahrzeugreifen auch auf eine Abweichung im Verschleiß geschlossen werden kann.

In CN 104334375 A ist ferner beschrieben, das Verzögerungssignal eines Reifen-Sensor-Moduls an einem bestimmten Fahrzeugreifen mit einem Referenz-Verzögerungssignal für einen Referenz-Fahrzeugreifen mit normalem Abrieb zu vergleichen. Ergeben sich für den jeweiligen Fahrzeugreifen Unterschiede zum Referenz-Reifen, wird auf einen ungleichmäßigen Verschleiß geschlossen.

In US 7832263 B2 ist ferner beschrieben, mehrere im Fahrzeugreifen integrierte Sensoren im Hinblick auf ihre Signalstärke auszuwerten. Die Sensoren sind dabei in unterschiedlichen Tiefen bzw. an unterschiedlichen Positionen im jeweiligen Fahrzeugreifen angeordnet, so dass im laufenden Betrieb eine "Karte" erstellt werden kann, die mit einer "Referenz-Karte" für einen neuen Fahrzeugreifen verglichen wird. Auf diese Weise lässt sich auf den Verschleiß des jeweiligen Fahrzeugreifens schließen.

Nachteilig bei bekannten Methoden ist, dass diese sehr aufwendig sind und/oder einen unregelmäßigen Verschleiß innerhalb eines Fahrzeugreifens nicht lokalisieren können, so dass eine adäquate Reaktion auf den Verschleiß nicht immer möglich ist und ein Fahrzeugreifen unter Umständen bereits zu früh entsorgt wird.

Der folgenden Erfindung liegt die Aufgabe zugrunde, ein Verfahren und eine Verschleißermittlungsanordnung anzugeben, mit denen ein ungleichmäßiger Verschleiß eines Fahrzeugreifens einfach und zuverlässig festgestellt werden kann und mit denen der Betrieb der Fahrzeugreifen eines Fahrzeuges optimiert werden kann.

Diese Aufgabe wird durch ein Verfahren und eine Verschleißermittlungsanordnung gemäß den unabhängigen Ansprüchen gelöst. Die Unteransprüche geben bevorzugte Weiterbildungen an.

In dem erfindungsgemäßen Verfahren ist demnach vorgesehen, einen ungleichmäßig abgenutzten Fahrzeugreifens zu ermitteln oder festzustellen, wobei der Fahrzeugreifen auf einer Reifeninnenseite mindestens zwei Sensoreinheiten als Bestandteil mindestens eines Reifen-Sensor-Moduls aufweist, die jeweils ausgebildet sind, eine radiale Beschleunigung zu erfassen, wobei
- eine erste Sensoreinheit in einem ersten Sensor-Abstand (in axialer Richtung) zu einer Reifenmitte in einem ersten Reifen-Bereich des Fahrzeugreifens angeordnet ist, und
- eine zweite Sensoreinheit in einem zweiten Sensor-Abstand (in axialer Richtung) zu der Reifenmitte in einem zweiten Reifen-Bereich des Fahrzeugreifens angeordnet ist,
wobei die Reifenmitte zwischen dem ersten Reifen-Bereich und dem zweiten Reifen-Bereich liegt, so dass beide Sensoreinheiten bzw. Reifen-Bereiche auf unterschiedlichen Seiten der Reifenmitte liegen.

In dem Verfahren sind dabei mindestens die folgenden Schritte vorgesehen:
- Einlesen einer ersten radialen Beschleunigung über die Zeit, die von der ersten Sensoreinheit für den ersten Reifen-Bereich ermittelt und ausgegeben wird, und einer zweiten radialen Beschleunigung über die Zeit, die von der zweiten Sensoreinheit für den zweiten Reifen-Bereich ermittelt und ausgegeben wird;
- Ermitteln einer ersten Aufstandsgröße in Abhängigkeit der eingelesenen ersten radialen Beschleunigung über die Zeit und einer zweiten Aufstandsgröße in Abhängigkeit der eingelesenen zweiten radialen Beschleunigung über die Zeit, wobei die jeweilige Aufstandsgröße eine Bodenaufstandslänge charakterisiert, über die der Fahrzeugreifen in dem jeweiligen Reifen-Bereich, in dem die jeweilige radiale Beschleunigung gemessen wird, auf einer Fahrbahn aufliegt;
- Ermitteln einer Abweichung zwischen der ersten Aufstandsgröße und der zweiten Aufstandsgröße;
- Ermitteln, ob die Abweichung ein Zulässigkeitskriterium erfüllt, wobei das Zulässigkeitskriterium angibt, ob die ermittelte Abweichung innerhalb eines zugelassenen Wertebereiches liegt; und
- Ausgeben eines Hinweis-Signals, wenn das Zulässigkeitskriterium nicht erfüllt ist.

Erfindungsgemäß ist ferner eine Verschleißermittlungsanordnung mit einem Algorithmus zur Durchführung des erfindungsgemäßen Verfahrens vorgesehen, sowie ein Fahrzeug mit der Verschleißermittlungsanordnung. Der Algorithmus kann dabei auf einer Verarbeitungseinheit auf dem Fahrzeugreifen oder auf einer Auswerteinheit im Fahrzeug oder aber in einer externen Steuereinheit außerhalb des Fahrzeuges angeordnet sein, so dass sich das Verfahren je nach Anwendung an unterschiedlichen Positionen ausführen lässt.

Das erfindungsgemäße Verfahren hat dabei den Vorteil, dass auf einfache Weise eine asymmetrische Abnutzung des Fahrzeugreifens erkannt werden kann. Dazu werden die Sensor-Signale zweier Sensoreinheiten ausgewertet, die sich auf unterschiedlichen Seiten der Reifenmitte befinden. Dabei wurde erkannt, dass eine in axialer Richtung asymmetrische Abnutzung des Fahrzeugreifens eine ungleichmäßige bzw. in axialer Richtung ebenfalls asymmetrische Bodenaufstandsfläche zur Folge hat. Dies lässt sich in einfacher Weise feststellen, wenn das zeitliche Verhalten der radialen Beschleunigungen auf unterschiedlichen Seiten der Reifenmitte ausgewertet wird. Im Bereich der Bodenaufstandsfläche wird die radiale Beschleunigung nämlich minimal, insbesondere Null. Ergeben sich daraus seitenweise Unterschiede, kann auf eine asymmetrische Abnutzung geschlossen werden, insofern diese Unterschiede zu groß werden bzw. nicht mehr innerhalb einer verkraftbaren Toleranz liegen. Dies kann dann über das Hinweis-Signal entsprechend ausgegeben werden, beispielsweise in Form einer Anzeige auf einem Display für den Nutzer oder Halter des Fahrzeuges oder einer Anweisung an einen Flottenbetreiber.

Gemäß einer bevorzugten Ausführungsform ist vorgesehen, dass die Abweichung aus einem Verhältnis zwischen der ersten Aufstandsgröße und der zweiten Aufstandsgröße gebildet wird und das Zulässigkeitskriterium erfüllt ist, wenn die ermittelte Abweichung in einem zugelassenen Wertebereich von nicht mehr als 30%, insbesondere nicht mehr als 25%, bevorzugt nicht mehr als 20% liegt. Dies bedeutet, dass die beiden Aufstandsgrößen um nicht mehr als 30%, insbesondere nicht mehr als 25%, bevorzugt nicht mehr als 20%, voneinander abweichen. Anhand des Verhältnisses lässt sich einfach ermitteln, ob die Abweichung zulässig ist oder nicht, und es lassen sich auch einfache Grenzen für die Zulässigkeit angeben, beispielsweise aus Erfahrungswerten. So kann ab einer der oben genannten Abweichungen in einfacher und zuverlässiger Weise entschieden werden, die Fahrzeugreifen am Fahrzeug zu tauschen, so dass der asymmetrisch abgenutzte Fahrzeugreifen an einer Position montiert wird, an der die weniger stark abgenutzte Seite stärker belastet ist.

Gemäß einer weitere Ausführungsform ist vorgesehen, dass die Abweichung durch eine Differenz zwischen der ersten Aufstandsgröße und der zweiten Aufstandsgröße gebildet wird und das Zulässigkeitskriterium erfüllt ist, wenn die ermittelte Abweichung in einem zugelassenen Wertebereich liegt, der einen vorgegebenen Grenzwert betragsmäßig unterschreitet. Es können also auch absolute Werte analysiert werden, um zu entscheiden, ob ein Fahrzeugreifen zu tauschen ist. In dem Fall ist der absolute Grenzwert für die Abweichung für den jeweiligen Fahrzeugreifen entsprechend so zu wählen, dass die o.g. prozentualen Abweichungen (nicht mehr als 30%, insbesondere nicht mehr als 25%, bevorzugt nicht mehr als 20%) ebenfalls eingehalten werden.

Vorzugsweise ist weiterhin vorgesehen, dass die erste radiale Beschleunigung und die zweite radiale Beschleunigung über Sensoreinheiten ermittelt werden, die sich auf unterschiedlichen Seiten der Reifenmitte befinden und deren jeweiliger Sensor-Abstand zur Reifenmitte dabei identisch ist, insbesondere innerhalb einer fertigungsbedingen Toleranz identisch ist. Es wird also eine im Wesentlichen symmetrische Anordnung der Sensoreinheiten um die Reifenmitte gewählt, um die Bodenaufstandslängen an in etwa derselben Stelle der jeweiligen Reifen-Seite zu ermitteln und darüber zuverlässigere Aussagen über die asymmetrische Abnutzung zu erhalten.

Da der Fahrzeugreifen an den Außenseiten normalerweise stärker abgenutzt wird, ist vorzugsweise weiterhin vorgesehen, dass die Sensoreinheiten jeweils näher an einer Reifenschulter liegen als an der Reifenmitte. Über die Außenbereiche ist die Asymmetrie zuverlässiger feststellbar, da sich insgesamt größere Werte für die Abweichungen ergeben, insbesondere in Relation zu üblicherweise auftretenden seitenweisen Schwankungen. Der zulässige Wertebereich kann in dem Fall je nach Anwendung auch an die axiale Positionierung der Sensoreinheiten am Fahrzeugreifen angepasst werden.

Vorzugsweise ist weiterhin vorgesehen, dass
- die erste radiale Beschleunigung über die Zeit, die von der ersten Sensoreinheit für den ersten Reifen-Bereich ermittelt und ausgegeben wird, über mehrere Umdrehungen des Reifens eingelesen wird, und/oder
- die zweite radiale Beschleunigung über die Zeit, die von der zweiten Sensoreinheit für den zweiten Reifen-Bereich ermittelt und ausgegeben wird, über mehrere Umdrehungen des Reifens eingelesen wird.

Durch eine solche zeitliche Betrachtung der jeweiligen radialen Beschleunigung über mehrere Umdrehungen können Messungenauigkeiten oder Schwankungen ausgeglichen werden, wobei dies beispielsweise durch eine nachfolgende Mittelung der Signale über die aufgenommenen Umdrehungen erfolgen kann. Nachfolgend werden dann die gemittelten Signale bzw. der gemittelte zeitliche Verlauf der jeweiligen radialen Beschleunigung weiterverwendet.

Vorzugsweise ist weiterhin vorgesehen, dass
- für die erste radiale Beschleunigung über die Zeit, die von der ersten Sensoreinheit für den ersten Reifen-Bereich ermittelt und ausgegeben wird, eine erste Kennlinie gebildet wird und aus der ersten Kennlinie die erste Aufstandsgröße ermittelt wird, und/oder
- für die zweite radiale Beschleunigung über die Zeit, die von der zweiten Sensoreinheit für den zweiten Reifen-Bereich ermittelt und ausgegeben wird, eine zweite Kennlinie gebildet wird und aus der zweiten Kennlinie die zweite Aufstandsgröße ermittelt wird

Durch entsprechende mathematische oder analytische Methoden kann die jeweilige Aufstandsgröße also in einfacher Weise aus einer Kennlinie ermittelt werden, um ein Maß für die jeweilige Bodenaufstandslänge im jeweiligen Reifen-Bereich zu erhalten.

Vorzugsweise ist weiterhin vorgesehen, dass
- aus der eingelesenen ersten radialen Beschleunigung über die Zeit ein erster Zeitraum ermittelt wird, in dem sich die erste Sensoreinheit innerhalb einer Bodenaufstandsfläche des Fahrzeugreifens befindet, und/oder
- aus der eingelesenen zweiten radialen Beschleunigung über die Zeit ein zweiter Zeitraum ermittelt wird, in dem sich die zweite Sensoreinheit innerhalb einer Bodenaufstandsfläche des Fahrzeugreifens befindet.

Es wird also ermittelt, wann und wie lange sich die jeweilige Sensoreinheit über dem Boden befindet, wobei dies vorzugsweise darüber ermittelt werden kann, dass die jeweilige radiale Beschleunigung innerhalb einer Umdrehung minimal wird, insbesondere Null wird.

Vorzugsweise ist dann vorgesehen, dass als erste Aufstandsgröße direkt der ermittelte erste Zeitraum verwendet wird, und/oder als zweite Aufstandsgröße direkt der ermittelte zweite Zeitraum verwendet wird. Die Zeiträume sind bereits ein Maß dafür, wie lang die Bodenaufstandslänge ist, da sich beide Sensoreinheiten an demselben Fahrzeugreifen befinden und sich mit derselben Abrollgeschwindigkeit bewegen, so dass der jeweilige Zeitraum bereits die jeweilige Bodenaufstandslänge charakterisiert.

Es kann aber auch vorgesehen sein, dass
als erste Aufstandsgröße eine erste Bodenaufstandslänge ermittelt wird, die angibt, über welche Strecke sich die erste Sensoreinheit innerhalb der Bodenaufstandsfläche des Fahrzeugreifens befindet, wobei die erste Bodenaufstandslänge vorzugsweise in Abhängigkeit des ermittelten ersten Zeitraums ermittelt wird, und/oder
als zweite Aufstandsgröße eine zweite Bodenaufstandslänge ermittelt wird, die angibt, über welche Strecke sich die zweite Sensoreinheit innerhalb der Bodenaufstandsfläche des Fahrzeugreifens befindet, wobei die zweite Bodenaufstandslänge vorzugsweise in Abhängigkeit des ermittelten zweiten Zeitraums ermittelt wird.

Es können also auch Längen miteinander verglichen und deren Abweichungen ermittelt werden, wobei sich die jeweiligen Bodenaufstandslängen dann aus geometrischen Betrachtungen in Abhängigkeit einer Abrollgeschwindigkeit ergeben, wobei sich die Abrollgeschwindigkeit aus der jeweiligen ermittelten radialen Beschleunigung ergibt.
- Fig. 1: eine schematische Ansicht eines Fahrzeuges mit einer Reifen-SensorAnordnung;
- Fig. 1A: eine schematische Ansicht eines Fahrzeugreifens des Fahrzeuges gemäß Fig. 1;
- Fig. 2: ein zeitlicher Verlauf für eine radiale Beschleunigung in unterschiedlichen Reifen-Bereichen des Fahrzeugreifens gemäß Fig. 1A;
- Fig. 3A: eine Schnittansicht eines asymmetrisch abgenutzten Fahrzeugreifens;
- Fig. 3B: eine Bodenaufstandsfläche des Fahrzeugreifens gemäß Fig. 3A; und
- Fig. 4: ein Flussdiagramm einer Ausführungsform des erfindungsgemäßen Verfahrens.

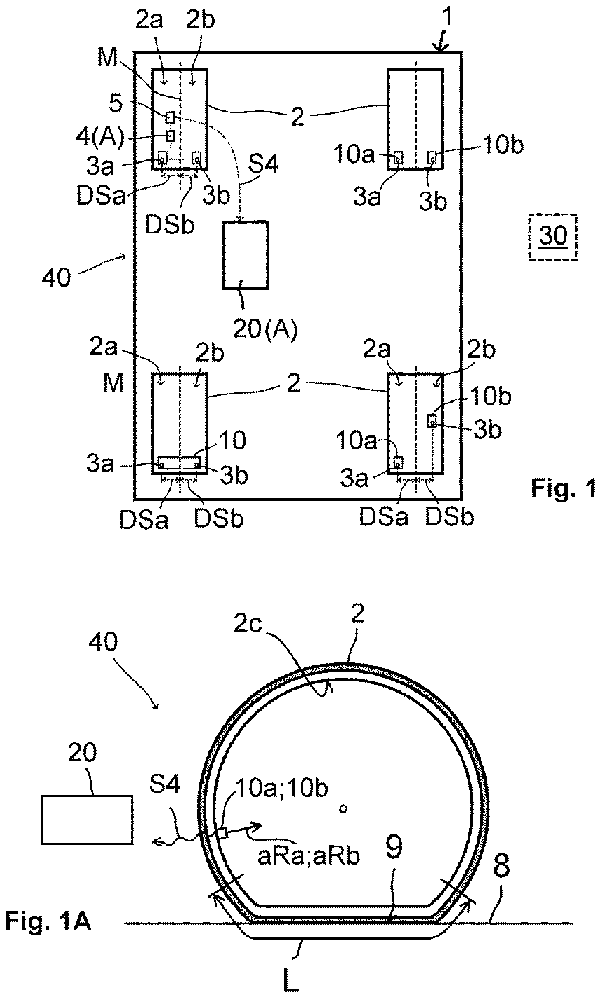

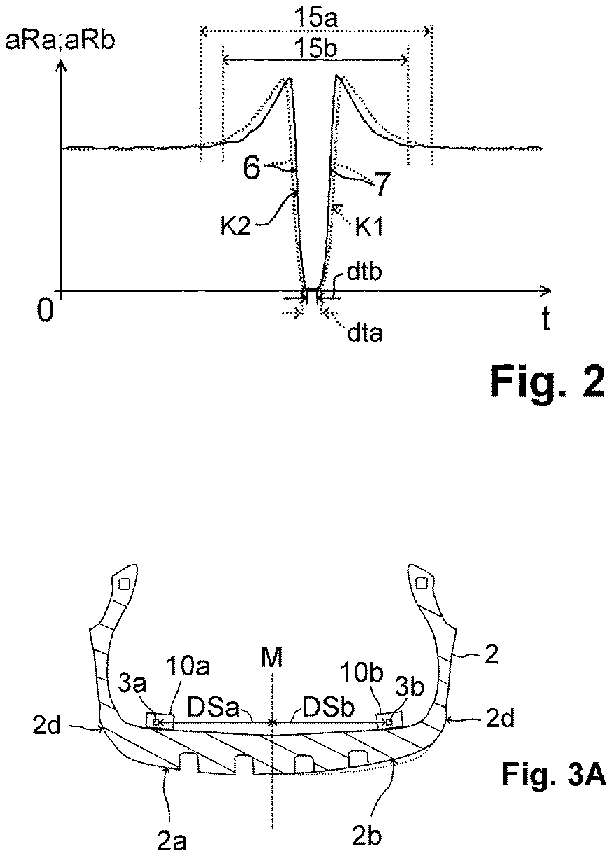

Figur 1 zeigt ein Fahrzeug 1 mit mehreren Fahrzeugreifen 2, wobei an zumindest einem der Fahrzeugreifen 2 zwei Reifen-Sensor-Module 10a, 10b mit jeweils einer Sensoreinheit 3a, 3b angeordnet sind, die Bestandteil einer Verschleißermittlungsanordnung 40 sind. Das jeweilige Reifen-Sensor-Modul 10a, 10b ist wie in Fig. 1A und 3A schematisch dargestellt, an einer Reifeninnenseite 2c des jeweiligen Fahrzeugreifens 2, vorzugsweise am Innerliner, befestigt und ausgebildet, über die jeweilige Sensoreinheit 3a, 3b eine auf die Lauffläche des Fahrzeugreifens 2 wirkende radialen Beschleunigung aRa, aRb, d.h. eine Beschleunigung in radialer Richtung, zu messen.

Wie in Fig. 1 und Fig. 3A angedeutet, ist ein erstes Reifen-Sensor-Modul 10a in einem ersten Reifen-Bereich 2a des jeweiligen Fahrzeugreifens 2 angeordnet und ein zweites Reifen-Sensor-Modul 10b in einem zweiten Reifen-Bereich 2b desselben Fahrzeugreifens 2. Der erste Reifen-Bereich 2a und der zweite Reifen-Bereich 2b liegen dabei auf unterschiedlichen Seiten einer Reifenmitte M, so dass sich auch die jeweiligen Sensoreinheiten 3a, 3b auf unterschiedlichen Seiten der Reifenmitte M befinden. Dabei ergibt sich zwischen der Reifenmitte M und der ersten Sensoreinheit 3a ein erster Sensor-Abstand DSa (in axialer Richtung) und zwischen der Reifenmitte M und der zweiten Sensoreinheit 3b ein zweiter Sensor-Abstand DSb, wobei die beiden Sensor-Abstände DSa, DSb im Wesentlichen bzw. innerhalb einer fertigungsbedingten Toleranz identisch sind, so dass die beiden Sensoreinheiten 3a, 3b in axialer Richtung gesehen im Wesentlichen symmetrisch zur Reifenmitte M liegen. Dabei können die beiden Sensoreinheiten 3a, 3b umfangsseitig auch versetzt zueinander angeordnet sein, wie beispielhaft in Fig. 1 für den hinteren rechten Fahrzeugreifen 2 dargestellt. Vorzugsweise ist weiterhin vorgesehen, dass die jeweilige Sensoreinheit 3a, 3b näher zur nächstgelegenen Reifenschulter 2d des Fahrzeugreifens 2 liegt als zur Reifenmitte M.

Das erste Reifen-Sensor-Modul 10a bzw. die erste Sensoreinheit 3a misst demnach eine erste radiale Beschleunigung aRa, die in dem ersten Reifen-Bereich 2a vorherrscht, beispielsweise auf einer linken Seite des Fahrzeugreifens 2, und das zweite Reifen-Sensor-Modul 10b bzw. die zweite Sensoreinheit 3b misst eine zweite radiale Beschleunigung aRb, die in dem zweiten Reifen-Bereich 2b vorherrscht, beispielsweise auf einer rechten Seite des Fahrzeugreifens 2.

Die Verschleißermittlungsanordnung 40 weist ferner eine Verarbeitungseinheit 4 (in Fig. 1 nur für den linken vorderen Fahrzeugreifen 2 dargestellt) auf, die signalleitend mit der ersten Sensoreinheit 3a im ersten Reifen-Sensor-Modul 10a und mit der zweiten Sensoreinheit 3b im zweiten Reifen-Sensor-Modul 10b verbunden ist und die von der jeweiligen Sensoreinheit 3a, 3b erzeugte und ausgegebene (erste bzw. zweite) Sensor-Signale S3a, S3b aufnehmen und verarbeiten kann. Über die jeweiligen Sensor-Signale S3a, S3b werden die jeweiligen radialen Beschleunigungen aRa, aRb und ggf. weitere gemessene Daten übertragen.

Der beschriebene Aufbau kann gleichwirkend auch so abgewandelt werden, dass beide Sensoreinheiten 3a, 3b Bestanteil eines einzigen Reifen-Sensor Moduls 10 sind, in dem die Sensoreinheiten 3a, 3b beabstandet zueinander liegen, wie beispielhaft in Fig. 1 für den hinteren linken Fahrzeugreifen 2 dargestellt. Das Reifen-Sensor-Modul 10 ist dann derartig innenseitig des Fahrzeugreifens 2 positioniert, dass die beiden Sensoreinheiten 3a, 3b auf unterschiedlichen Seiten der Reifenmitte M liegen und dabei im Wesentlichen identische Sensor-Abstände DSa, DSb zur Reifenmitte M aufweisen. Die Verarbeitungseinheit 4 kann in dem Fall ebenfalls in diesem gemeinsamen Reifen-Sensor-Modul 10 integriert sein.

Bestandteil der Verschleißermittlungsanordnung 40 ist weiterhin eine am Fahrzeugreifen 2 angeordnete Kommunikationseinheit 5, über die von der Verarbeitungseinheit 4 erzeugte Daten-Signale S4 drahtlos ausgegeben werden können, beispielsweise an eine Auswerteeinheit 20 im Fahrzeug 1 (abseits des Fahrzeugreifens 2), die über eine entsprechende Empfangseinheit zum Empfangen der Daten-Signale S4 verfügt.

Die Verarbeitung der jeweiligen Sensor-Signale S3a, S3b in der Verarbeitungseinheit 4 kann hierbei darin bestehen, dass die Sensor-Signale S3a, S3b inhaltlich unverändert in die Daten-Signale S4 umgewandelt werden, die dann wiederum von der Kommunikationseinheit 5 ausgegeben werden, je nach Anwendung auch verschlüsselt. Es kann aber auch vorgesehen sein, dass durch einen Algorithmus A auf der Verarbeitungseinheit 4 bereits eine festgelegte Datenverarbeitung erfolgt und über die Daten-Signale S4 dann bereits verarbeitete Daten übermittelt werden, die über die Kommunikationseinheit 5 drahtlos ausgegeben werden.

Findet lediglich eine inhaltlich unveränderte Weitergabe der Sensor-Signale S3a, S3b statt, kann eine weitere Umrechnung reifenindividuell in der Auswerteeinheit 20 des Fahrzeuges 1 über einen auf dieser installierten Algorithmus A erfolgen. Weiterhin kann der Algorithmus A aber auch auf einer externen Steuereinheit 30 außerhalb des Fahrzeuges 1 installiert sein, beispielsweise als Bestandteil eines Flottenmanagementsystems oder eines Betriebshofsystems. Die Signalübertragung findet in dem Fall von der Kommunikationseinheit 5 am jeweiligen Fahrzeugreifen 2 zu der externen Steuereinheit 30 und/oder von der Auswerteeinheit 20 im Fahrzeug 1 zu der externen Steuereinheit 30 statt, beispielsweise fortlaufend oder sobald sich die externe Steuereinheit 30 in Reichweite befindet.

Die Reifen-Sensor-Module 10; 10a, 10b mit den darin jeweils enthaltenen Sensoreinheiten 3a, 3b und der Algorithmus A (auf der Verarbeitungseinheit 4 am Fahrzeugreifen 2 oder auf der Auswerteeinheit 20 im Fahrzeug 1 oder auf der externen Steuereinheit 30) bilden dabei die Verschleißermittlungsanordnung 40 mit aus, mit der in erfindungsgemäßer Weise wie nachfolgend beschrieben ein Verschleiß des jeweiligen Fahrzeugreifens 2, an dem sich die beiden Sensoreinheiten 3a, 3b befinden, ermittelt werden kann:

In Fig. 2 ist beispielhaft eine erste Kennlinie K1 (punktiert) dargestellt, in der die von der ersten Sensoreinheit 3a gemessene erste radiale Beschleunigung aRa über die Zeit t aufgetragen ist. Außerhalb eines ersten Betrachtungsfensters 15a ist die erste radiale Beschleunigung aRa in etwa konstant. Innerhalb des ersten Betrachtungsfensters 15a steigt die erste radiale Beschleunigung aRa zunächst auf einen Hochpunkt an, weist dann eine abfallende Flanke 6 auf, die im Folgenden in etwa auf Null abfällt und anschließend in eine ansteigende Flanke 7 übergeht, die bis zu einem zweiten Hochpunkt ansteigt. Für größere Zeiten t fällt die erste radiale Beschleunigung aRa wieder auf einen nahezu konstanten Wert außerhalb des ersten Betrachtungsfensters 15a ab. Der genaue Verlauf der ersten Kennlinie K1 ist dabei abhängig von der Orientierung der ersten Sensoreinheit 3a im ersten Reifen-Bereich 2a.

Das erste Betrachtungsfenster 15a gibt dabei den zeitlichen Verlauf der ersten radialen Beschleunigung aRa an, während sich die erste Sensoreinheit 3a innerhalb eines Reifenlatschbereiches L befindet (s. Fig. 1A). Der Fahrzeugreifen 2 steht dabei innerhalb einer Bodenaufstandsfläche 9 auf einer Fahrbahn 8 oder auf einem Untergrund auf, wodurch sich der Fahrzeugreifen 2 verformt und sich eine Krümmung der Reifeninnenseite 2c verändert. Diese veränderte Krümmung liegt dabei nicht nur innerhalb der Bodenaufstandsfläche 9 vor, sondern auch in angrenzenden Übergangsbereichen, die in dem Reifenlatschbereich L zusätzlich enthalten sind.

Daraus resultiert auch eine Veränderung der sonst nahezu konstanten ersten radialen Beschleunigung aRa. Die erste radiale Beschleunigung aRa wird dann minimal, d.h. idealerweise Null, wenn sich die erste Sensoreinheit 3a im Bereich der Bodenaufstandsfläche 9 des Fahrzeugreifens 2 befindet, innerhalb derer der Fahrzeugreifen 2 die Fahrbahn 8 berührt. Die Reifeninnenseite 2c verläuft dann idealerweise parallel zur Fahrbahn 8 und die erste radiale Beschleunigung aRa wird idealerweise Null. Die Flanken 6, 7 geben dann entsprechend an, dass sich die erste Sensoreinheit 3a in den bzw. aus dem Bereich der Bodenaufstandsfläche 9 bewegt.

In Fig. 2 wird der ersten Kennlinie K1 weiterhin eine zweite Kennlinie K2 (durchgezogen) überlagert. In dieser zweiten Kennlinie K2 ist die von der zweiten Sensoreinheit 3b gemessene zweite radiale Beschleunigung aRb über die Zeit t aufgetragen. Auch für diese zweite Kennlinie K2 gilt, dass die zweite radiale Beschleunigung aRb innerhalb eines zweiten Betrachtungsfensters 15b zunächst auf einen Hochpunkt ansteigt, dann eine abfallende Flanke 6 aufweist, die im Folgenden in etwa auf Null abfällt und anschließend in eine ansteigende Flanke 7 übergeht, die bis zu einem zweiten Hochpunkt ansteigt. Für größere Zeiten t fällt die zweite radiale Beschleunigung aRb wieder auf einen nahezu konstanten Wert außerhalb des zweiten Betrachtungsfensters 15b ab. Das zweite Betrachtungsfenster 15b gibt folglich ebenfalls den zeitlichen Verlauf der zweiten radialen Beschleunigung aRb an, während sich die zweite Sensoreinheit 3b innerhalb des Reifenlatschbereiches L und der Bodenaufstandsfläche 9 befindet.

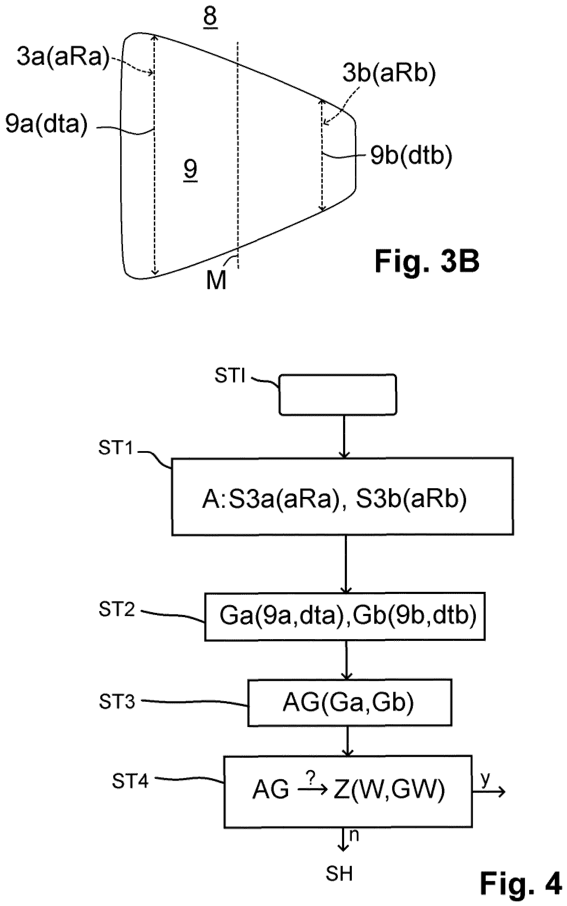

Für beide Kennlinien K1, K2 ergibt sich gemäß Fig. 2 ein abweichender zeitlicher Verlauf, der daraus resultiert, dass der Reifenlatschbereich L in den beiden Reifen-Bereichen 2a, 2b des Fahrzeugreifens 2 in Umfangsrichtung unterschiedlich stark ausgedehnt ist. In Fig. 3A ist dazu beispielhaft ein Fahrzeugreifen 2 in einer Schnittansicht dargestellt, der linksseitig und rechtsseitig unterschiedlich stark abgenutzt bzw. verschlissen ist, z.B. weil die Belastung während des Betriebs nicht gleichmäßig auf den Fahrzeugreifen 2 verteilt ist. Die punktierte Linie im rechten, zweiten Reifen-Bereich 2b gibt dabei zum Vergleich die Abnutzung des linken, ersten Reifen-Bereiches 2a an. Für einen solchen Fahrzeugreifen 2 ergibt sich die schematisch und beispielhaft in Fig. 3B dargestellte Bodenaufstandsfläche 9, die aufgrund der ungleichmäßigen Abnutzung ebenfalls ungleichmäßig bzw. asymmetrisch verläuft. In Fig. 3B ist durch die gestrichelten Linien angedeutet, in welchem Bereich die beiden Sensoreinheiten 3a, 3b die jeweilige radiale Beschleunigung aRa, aRb messen.

Dabei wird deutlich, dass der erste Reifen-Bereich 2a die Fahrbahn 8 über eine erste Bodenaufstandslänge 9a berührt, die größer ist als eine zweite Bodenaufstandslänge 9b, über die der zweite Reifen-Bereich 2b die Fahrbahn 8 berührt. Daher fällt die erste radiale Beschleunigung aRa über einen längeren ersten Zeitraum dta, in dem die erste Sensoreinheit 3a über der Bodenaufstandsfläche 9 liegt, in etwa auf Null ab, und das erste Betrachtungsfenster 15a ist entsprechend länger als das zweite Betrachtungsfenster 15b, da die zweite radiale Beschleunigung aRb entsprechend über einen kürzeren zweiten Zeitraum dtb, in dem die zweite Sensoreinheit 3b über der Bodenaufstandsfläche 9 liegt, in etwa auf Null abfällt. Der erste Zeitraum dta und der zweite Zeitraum dtb sind also ein Maß für die Bodenaufstandslänge 9a, 9b im jeweiligen Reifen-Bereich 2a, 2b.

Dies kann sich in dem in Fig. 4 beispielhaft in einem Flussdiagramm dargestellten Verfahren zunutze gemacht werden, das vorzugsweise von dem jeweiligen Algorithmus A in der Verarbeitungseinheit 4 oder auf der Auswerteeinheit 20 oder auf der externen Steuereinheit 30 ausgeführt wird. Demnach werden nach einem Initialisierungsschritt STI in einem ersten Schritt ST1 über die jeweiligen Sensor-Signale S3a, S3b zunächst die jeweiligen radialen Beschleunigungen aRa, aRb über die Zeit t aufgenommen oder eingelesen. Dies kann für eine einzelne Reifenumdrehung erfolgen oder es kann eine Mittelung über mehrere Reifenumdrehungen stattfinden, um Ungenauigkeiten herauszufiltern.

In einem zweiten Schritt ST2 werden dann aus den zeitlichen Verläufen der radialen Beschleunigungen aRa, aRb, z.B. aus den o.g. Kennlinien K1, K2, für jede Sensoreinheit 3a, 3b bzw. für jeden Reifen-Bereich 2a, 2b auf den unterschiedlichen Seiten der Reifenmitte M durch entsprechende analytische Methoden jeweils eine Aufstandsgröße Ga, Gb ermittelt. Die jeweilige Aufstandsgröße Ga, Gb charakterisiert dabei, über welche Bodenaufstandslänge 9a, 9b der jeweilige Reifen-Bereich 2a, 2b im aktuellen Betrieb auf der Fahrbahn 8 aufliegt. Die Aufstandsgröße Ga, Gb kann dabei direkt durch die o.g. Zeiträume dta, dtb gegeben sein oder aber unter Berücksichtigung einer Abrollgeschwindigkeit, die aus der jeweiligen radialen Beschleunigung aRa, aRb geometrisch hergeleitet werden kann, direkt aus der Bodenaufstandslänge 9a, 9b folgen. Es sind auch weitere Aufstandsgrößen Ga, Gb denkbar, die die Bodenaufstandslänge 9a, 9b charakterisieren.

In einem dritten Schritt ST3 wird eine Abweichung AG zwischen den ermittelten Aufstandsgrößen Ga, Gb ermittelt, z.B. durch Bilden einer Differenz oder eines Verhältnisses zwischen den beiden Aufstandsgrößen Ga, Gb. Die Abweichung AG ist dabei ein Maß für die Asymmetrie der Aufstandsgrößen Ga, Gb, d.h. der Zeiträume dta, dtb bzw. der Bodenaufstandslängen 9a, 9b oder dergleichen, und charakterisiert daher, wie ungleichmäßig sich der Fahrzeugreifen 2 beidseitig der Reifenmitte M abnutzt.

In einem vierten Schritt ST4 wird sodann geprüft, ob die Abweichung AG ein Zulässigkeitskriterium Z erfüllt, d.h. ob die Abweichung AG beispielsweise innerhalb eines zugelassenen Wertebereiches W liegt, z.B. unterhalb eines Grenzwertes GW bei einer Differenz, oder innerhalb eines Intervalls um einen bestimmten Faktor, z.B. 0 oder 1, bei einem Verhältnis. Für die Festlegung des zulässigen Wertebereiches W können Erfahrungswerte herangezogen werden. So können Abweichungen AG von beispielsweise bis zu 30%, insbesondere bis zu 25%, bevorzugt bis zu 20% zugelassen werden, da diese noch verkraftbar sind. Liegt die Abweichung AG außerhalb des zugelassenen Wertebereiches W ist das Zulässigkeitskriterium Z nicht erfüllt und es wird beispielsweise ein Hinweis-Signal SH erzeugt und ausgegeben. Gleichbedeutend damit kann auch ein dauerhaft erzeugtes Signal, das bei Vorliegen des zulässigen Wertebereiches W ausgegeben wird, wegfallen. Das Hinweis-Signal SH weist darauf hin, dass ein unzulässiger seitenweise asymmetrischer Verschleiß des Fahrzeugreifens 2 vorliegt. Der Fahrzeughalter oder Flottenbetreiber kann dann entsprechend eingreifen und beispielsweise die Fahrzeugreifen 2 tauschen oder die Fahrzeugreifen 2 am Fahrzeug 1 rotieren.

### Bezugszeichenliste

- 1: Fahrzeug
- 2: Fahrzeugreifen
- 2a: erster Reifen-Bereich
- 2b: zweiter Reifen-Bereich
- 2c: Reifeninnenseite
- 2d: Reifenschulter
- 3a: erste Sensoreinheit
- 3b: zweite Sensoreinheit
- 4: Verarbeitungseinheit
- 5: Kommunikationseinheit
- 6: abfallende Flanke
- 7: ansteigende Flanke
- 8: Fahrbahn
- 9: Bodenaufstandsfläche
- 9a: erste Bodenaufstandslänge
- 9b: zweite Bodenaufstandslänge
- 10: Reifen-Sensor-Modul
- 10a: erstes Reifen-Sensor-Modul
- 10b: zweites Reifen-Sensor-Modul
- 15a: erstes Betrachtungsfenster
- 15b: zweites Betrachtungsfenster
- 20: Auswerteeinheit
- 30: externe Steuereinheit
- 40: Verschleißermittlungsanordnung
- A: Algorithmus
- AG: Abweichung
- aRa: erste radiale Beschleunigung
- aRb: zweite radiale Beschleunigung
- dta: zweiter Zeitraum
- dtb: erster Zeitraum
- DSa: erster Sensor-Abstand
- DSb: zweiter Sensor-Abstand
- Ga: erste Aufstandsgröße
- Gb: zweite Aufstandsgröße
- GW: Grenzwert
- K1: erste Kennlinie
- K2: zweite Kennlinie
- L: Reifenlatschbereich
- M: Reifenmitte
- S3a: erstes Sensor-Signal
- S3b: zweites Sensor-Signal
- SH: Hinweis-Signal
- STI: Initialisierungsschritt
- ST1: erster Schritt
- ST2: zweiter Schritt
- ST3: dritter Schritt
- ST4: vierter Schritt
- t: Zeit
- W: zugelassener Wertebereich
- Z: Zulässigkeitskriterium

## Patentansprüche

1. Verfahren zum Ermitteln eines ungleichmäßig abgenutzten Fahrzeugreifens (2), wobei der Fahrzeugreifen (2) auf einer Reifeninnenseite (2c) mindestens zwei Sensoreinheiten (3a, 3b) als Bestandteil mindestens eines Reifen-Sensor-Moduls (10; 10a, 10b) aufweist, die jeweils ausgebildet sind, eine radiale Beschleunigung (aRa, aRb) zu erfassen, wobei
- eine erste Sensoreinheit (3a) in einem ersten Sensor-Abstand (DSa) zu einer Reifenmitte (M) in einem ersten Reifen-Bereich (2a) des Fahrzeugreifens (2) angeordnet ist, und
- eine zweite Sensoreinheit (3b) in einem zweiten Sensor-Abstand (DSb) zu der Reifenmitte (M) in einem zweiten Reifen-Bereich (2b) des Fahrzeugreifens (2) angeordnet ist,
wobei die Reifenmitte (M) zwischen dem ersten Reifen-Bereich (2a) und dem zweiten Reifen-Bereich (2b) liegt, mit mindestens den folgenden Schritten:
- Einlesen einer ersten radialen Beschleunigung (aRa) über die Zeit (t), die von der ersten Sensoreinheit (3a) für den ersten Reifen-Bereich (2a) ermittelt und ausgegeben wird, und einer zweiten radialen Beschleunigung (aRb) über die Zeit (t), die von der zweiten Sensoreinheit (3b) für den zweiten Reifen-Bereich (2b) ermittelt und ausgegeben wird (ST1);
- Ermitteln einer ersten Aufstandsgröße (Ga) in Abhängigkeit der eingelesenen ersten radialen Beschleunigung (aRa) über die Zeit (t) und einer zweiten Aufstandsgröße (Gb) in Abhängigkeit der eingelesenen zweiten radialen Beschleunigung (aRb) über die Zeit (t) (ST2),
wobei die jeweilige Aufstandsgröße (Ga, Gb) eine Bodenaufstandslänge (9a, 9b) charakterisiert, über die der Fahrzeugreifen (2) in dem jeweiligen Reifen-Bereich (2a, 2b), in dem die jeweilige radiale Beschleunigung (aRa, aRb) gemessen wird, auf einer Fahrbahn (8) aufliegt;
- Ermitteln einer Abweichung (AG) zwischen der ersten Aufstandsgröße (Ga) und der zweiten Aufstandsgröße (Gb) (ST3);
- Ermitteln, ob die Abweichung (AG) ein Zulässigkeitskriterium (Z) erfüllt (ST4), wobei das Zulässigkeitskriterium (Z) angibt, ob die ermittelte Abweichung (AG) innerhalb eines zugelassenen Wertebereiches (W) liegt; und
- Ausgeben eines Hinweis-Signals (SH), wenn das Zulässigkeitskriterium (Z) nicht erfüllt ist.

2. Verfahren nach Anspruch 1,
**dadurch gekennzeichnet, dass**
die Abweichung (AG) aus einem Verhältnis zwischen der ersten Aufstandsgröße (Ga) und der zweiten Aufstandsgröße (Gb) gebildet wird und das Zulässigkeitskriterium (Z) erfüllt ist, wenn die ermittelte Abweichung (AG) in einem zugelassenen Wertebereich (W) von nicht mehr als 30%, insbesondere nicht mehr als 25%, bevorzugt nicht mehr als 20% liegt.

3. Verfahren nach Anspruch 1,
**dadurch gekennzeichnet, dass**
die Abweichung (AG) durch eine Differenz zwischen der ersten Aufstandsgröße (Ga) und der zweiten Aufstandsgröße (Gb) gebildet wird und das Zulässigkeitskriterium (Z) erfüllt ist, wenn die ermittelte Abweichung (AG) in einem zugelassenen Wertebereich (W) liegt, der einen vorgegebenen Grenzwert (GW) betragsmäßig unterschreitet.

4. Verfahren nach einem der vorhergehenden Ansprüche,
**dadurch gekennzeichnet, dass**
die erste radiale Beschleunigung (aRa) und die zweite radiale Beschleunigung (aRb) über Sensoreinheiten (3a, 3b) ermittelt werden, die sich auf unterschiedlichen Seiten der Reifenmitte (M) befinden und deren jeweiliger Sensor-Abstand (DS1, DS2) zur Reifenmitte (M) dabei identisch ist, insbesondere innerhalb einer fertigungsbedingen Toleranz identisch ist.

5. Verfahren nach Anspruch 4,
**dadurch gekennzeichnet, dass**
die Sensoreinheiten (3a, 3b) jeweils näher an einer Reifenschulter (2d) liegen als an der Reifenmitte (M).

6. Verfahren nach einem der vorhergehenden Ansprüche,
**dadurch gekennzeichnet, dass**
- die erste radiale Beschleunigung (aRa) über die Zeit (t), die von der ersten Sensoreinheit (3a) für den ersten Reifen-Bereich (2a) ermittelt und ausgegeben wird, über mehrere Umdrehungen des Reifens (2) eingelesen wird, und/oder
- die zweite radiale Beschleunigung (aRb) über die Zeit (t), die von der zweiten Sensoreinheit (3b) für den zweiten Reifen-Bereich (2b) ermittelt und ausgegeben wird, über mehrere Umdrehungen des Reifens (2) eingelesen wird.

7. Verfahren nach einem der vorhergehenden Ansprüche,
**dadurch gekennzeichnet, dass**
- für die erste radiale Beschleunigung (aRa) über die Zeit (t), die von der ersten Sensoreinheit (3a) für den ersten Reifen-Bereich (2a) ermittelt und ausgegeben wird, eine erste Kennlinie (K1) gebildet wird und aus der ersten Kennlinie (K1) die erste Aufstandsgröße (Ga) ermittelt wird, und/oder
- für die zweite radiale Beschleunigung (aRb) über die Zeit (t), die von der zweiten Sensoreinheit (3b) für den zweiten Reifen-Bereich (2b) ermittelt und ausgegeben wird, eine zweite Kennlinie (K2) gebildet wird und aus der zweiten Kennlinie (K2) die zweite Aufstandsgröße (Gb) ermittelt wird

8. Verfahren nach einem der vorhergehenden Ansprüche,
**dadurch gekennzeichnet, dass**
- aus der eingelesenen ersten radialen Beschleunigung (aRa) über die Zeit (t) ein erster Zeitraum (dta) ermittelt wird, in dem sich die erste Sensoreinheit (3a) innerhalb einer Bodenaufstandsfläche (9) des Fahrzeugreifens (2) befindet, und/oder
- aus der eingelesenen zweiten radialen Beschleunigung (aRb) über die Zeit (t) ein zweiter Zeitraum (dtb) ermittelt wird, in dem sich die zweite Sensoreinheit (3b) innerhalb einer Bodenaufstandsfläche (9) des Fahrzeugreifens (2) befindet.

9. Verfahren nach Anspruch 8,
**dadurch gekennzeichnet, dass**
ermittelt wird, dass sich
- die erste Sensoreinheit (3a) innerhalb der Bodenaufstandsfläche (9) des Fahrzeugreifens (2) befindet, wenn die erste radiale Beschleunigung (aRa) minimal ist, insbesondere Null ist, und/oder
- die zweite Sensoreinheit (3b) innerhalb der Bodenaufstandsfläche (9) des Fahrzeugreifens (2) befindet, wenn die zweite radiale Beschleunigung (aRb) minimal ist, insbesondere Null ist.

10. Verfahren nach Anspruch 8 oder 9,
**dadurch gekennzeichnet, dass**
als erste Aufstandsgröße (Ga) der ermittelte erste Zeitraum (dta) verwendet wird, und/oder als zweite Aufstandsgröße (Gb) der ermittelte zweite Zeitraum (dtb) verwendet wird.

11. Verfahren nach Anspruch 8 oder 9,
**dadurch gekennzeichnet, dass**
als erste Aufstandsgröße (Ga) eine erste Bodenaufstandslänge (9a) ermittelt wird, die angibt, über welche Strecke sich die erste Sensoreinheit (3a) innerhalb der Bodenaufstandsfläche (9) des Fahrzeugreifens (2) befindet, wobei die erste Bodenaufstandslänge (9a) vorzugsweise in Abhängigkeit des ermittelten ersten Zeitraums (dta) ermittelt wird, und/oder
als zweite Aufstandsgröße (Gb) eine zweite Bodenaufstandslänge (9b) ermittelt wird, die angibt, über welche Strecke sich die zweite Sensoreinheit (3b) innerhalb der Bodenaufstandsfläche (9) des Fahrzeugreifens (2) befindet, wobei die zweite Bodenaufstandslänge (9b) vorzugsweise in Abhängigkeit des ermittelten zweiten Zeitraums (dtb) ermittelt wird.

12. Verschleißermittlungsanordnung (40) aus mindestens einem Fahrzeugreifen (2) und einem Algorithmus (A),
wobei auf einer Reifeninnenseite (2c) des Fahrzeugreifens (2) mindestens zwei Sensoreinheiten (3a, 3b) als Bestandteil mindestens eines Reifen-Sensor-Moduls (10; 10a, 10b) angeordnet sind, die jeweils ausgebildet sind, eine radiale Beschleunigung (aRa, aRb) zu erfassen und über Sensor-Signale (S3a, S3b) auszugeben, wobei
- eine erste Sensoreinheit (3a) in einem ersten Sensor-Abstand (DSa) zu einer Reifenmitte (M) in einem ersten Reifen-Bereich (2a) des Fahrzeugreifens (2) angeordnet ist, und
- eine zweite Sensoreinheit (3b) in einem zweiten Sensor-Abstand (DSb) zu der Reifenmitte (M) in einem zweiten Reifen-Bereich (2b) des Fahrzeugreifens (2) angeordnet ist,
wobei die Reifenmitte (M) zwischen dem ersten Reifen-Bereich (2a) und dem zweiten Reifen-Bereich (2b) liegt,
wobei der Algorithmus (A) ausgebildet ist,
- eine erste radiale Beschleunigung (aRa) über die Zeit (t) einzulesen, die von der ersten Sensoreinheit (3a) für den ersten Reifen-Bereich (2a) ermittelt und über erste Sensor-Signale (S3a) ausgegeben wird, und eine zweite radiale Beschleunigung (aRb) über die Zeit (t) einzulesen, die von der zweiten Sensoreinheit (3b) für den zweiten Reifen-Bereich (2b) ermittelt und über zweite Sensor-Signales (S3b) ausgegeben wird;
- eine erste Aufstandsgröße (Ga) in Abhängigkeit der eingelesenen ersten radialen Beschleunigung (aRa) über die Zeit (t) zu ermitteln und eine zweite Aufstandsgröße (Gb) in Abhängigkeit der eingelesenen zweiten radialen Beschleunigung (aRb) über die Zeit (t) zu ermitteln,
wobei die jeweilige Aufstandsgröße (Ga, Gb) eine Bodenaufstandslänge (9a, 9b) charakterisiert, über die der Fahrzeugreifen (2) in dem jeweiligen Reifen-Bereich (2a, 2b), in dem die jeweilige radiale Beschleunigung (aRa, aRb) gemessen wird, auf einer Fahrbahn (8) aufliegt;
- eine Abweichung (AG) zwischen der ersten Aufstandsgröße (Ga) und der zweiten Aufstandsgröße (Gb) zu ermitteln;
- zu ermitteln, ob die Abweichung (AG) ein Zulässigkeitskriterium (Z) erfüllt, wobei das Zulässigkeitskriterium (Z) angibt, ob die ermittelte Abweichung (AG) innerhalb eines zugelassenen Wertebereiches (W) liegt; und
- ein Hinweis-Signal (SH) auszugeben, wenn das Zulässigkeitskriterium (Z) nicht erfüllt ist.

13. Fahrzeug (1) mit einer Verschleißermittlungsanordnung (40) nach Anspruch 12, wobei der Algorithmus (A) am Fahrzeugreifen (2) auf einer Verarbeitungseinheit (4) oder im Fahrzeug (1) auf einer Auswerteeinheit (20) abseits des Fahrzeugreifens (2) oder abseits des Fahrzeuges (1) auf einer externen Steuereinheit (30) vorgesehen ist.
